# EUROPÄISCHE PATENTSCHRIFT

(11) **EP 2 997 931 B1**
(45) Veröffentlichungstag und Bekanntmachung des Hinweises auf die Patenterteilung: **11.12.2019**
(21) Anmeldenummer: 15184697.9
(22) Anmeldetag: 10.09.2015
(51) Int. Cl.: A61C 13/265, A61C 8/00

(54) **INSTRUMENT ZUR HANDHABUNG EINES DENTALTEILS**
INSTRUMENT FOR HANDLING A DENTAL PART
INSTRUMENT DE MANIPULATION D'UNE PIECE DENTAIRE

(30) Priorität: 19.09.2014 CH 14122014; 19.09.2014 CH 14132014
(43) Veröffentlichungstag der Anmeldung: 23.03.2016
(73) Patentinhaber: Cendres + Métaux SA, 2504 Bienne (CH)
(72) Erfinder: Fäh, Mathias, 4500 Solothurn (CH); Strazza, Mathias, 2554 Meinisberg (CH); Walther, Matthias, 4142 Münchenstein (CH)
(74) Vertreter: AMMANN PATENTANWÄLTE AG BERN

(56) Entgegenhaltungen:
- WO-A1-01/50978
- DE-U1-202007 004 638
- KR-A- 20130 025 481
- KR-B1- 101 360 952

## Beschreibung

Die Erfindung bezieht sich auf ein Instrument zur Handhabung eines Dentalteils gemäss Oberbegriff des Anspruchs 1.

Derartige Instrumente sind in Form von Schraubendrehern ausgebildet, wie sie aus der EP 0 986 341 A1, EP 2 281 527 A1 und EP 2 567 672 A2 bekannt sind. Diese Instrumente weisen zur Aufnahme des Kopfes des Dentalteils ein vorne offen ausgebildetes Verbindungsende auf. Instrument und Dentalteil werden demnach miteinander in Verbindung gebracht, indem sie relativ zueinander in Richtung der Längsachse verschoben werden. Allerdings können die Platzverhältnisse beschränkt sein, z.B. dann, wenn das Dentalteil im Mund eines Patienten angebracht ist, so dass ein Aufsetzen des Instruments auf das Dentalteil erschwert ist.

Aus der WO 01/50978 A1 ist ein Adapter bekannt, der durch Verschieben in seiner Längsrichtung mit einer Einheilkappe verbindbar ist.

In der KR 101 360 952 B1 ist ein Behälter gezeigt, an welchem mittels einer Schraube ein Implantat befestigbar ist.

In der KR 2013 0025481 A ist eine Halterung für ein Implantat gezeigt, welche ein Gehäuse und ein C-förmiges Halteteil aufweist.

In DE 20 2007 004 638 U1 ist eine Haltevorrichtung beschrieben, in welcher ein Implantat aufgenommen ist und welche Halteelemente mit Rastvorsprüngen aufweist. Zur Entnahme des Implantats ist ein separates Entnahmewerkzeug vorgesehen.

Es ist eine Aufgabe der vorliegenden Erfindung, ein Instrument anzugeben, welches die Handhabung eines Dentalteils erleichtert.

Diese Aufgabe wird durch das Instrument gemäss dem Anspruch 1 gelöst. Die weiteren Ansprüche geben bevorzugte Ausführungen des erfindungsgemässen Instruments, ein mit diesem verbindbaren Patrizenteil sowie einen Teilesatz mit Instrument und Patrizenteil an.

Gemäss Anspruch 1 weist das Verbindungsende des Instruments eine seitlich offene Aufnahmeöffnung auf, so dass Verbindungsende und Dentalteil verbindbar sind, indem sie relativ zueinander quer zur Längsachse des Instruments verschoben werden. Diese Ausgestaltung erleichtert die Handhabung, da z.B. ein im Mund befestigtes Dentalteil gelöst werden kann, indem das Instrument durch seitliches Verschieben aufgesetzt wird.

Weiter umfasst das Verbindungsende des Instruments mindestens ein Haltemittel zum Halten des in der Aufnahmeöffnung aufgenommenen Kopfes des Dentalteils, um einem Trennen von Verbindungsende und Kopf entgegenzuwirken. Dadurch wird der Gefahr begegnet, dass das Dentalteil bei der Handhabung unbeabsichtigterweise vom Instrument herunterfällt und unter Umständen in die Speiseröhre des Patienten oder schlimmer in seine Luftröhre gelangt ("aspirationssichere Handhabung").

Vorzugsweise ist das mindestens eine Haltemittel in der Längsachse des Instruments federnd ausgebildet und zum seitlichen Halten des in der Aufnahmeöffnung aufgenommenen Kopfes des Dentalteils ausgestaltet. Beispielsweise ist eine federnde Nase ein derartiges Haltemittel.

Das Verbindungsende weist mindestens einen Anschlag auf, der mit einem am Dentalteil, insbesondere Patrizenteil gebildeten Vorsprung kontaktierbar ist, indem Instrument und Dentalteil nach dem Zusammenfügen relativ zueinander um die Drehachse gedreht werden. Diese Ausgestaltung hat den besonderen Vorteil, dass das Instrument bei einer Verwendung als Schraubendreher nicht genau in Bezug auf das Dentalteil ausgerichtet sein muss, um es aufsetzen bzw. entfernen zu können, sondern ein Zusammenfügen bzw. Trennen ist auch dann möglich, wenn das Instrument in Bezug auf das Dentalteil um einen Winkel um die Längsachse gedreht ist.

Vorzugsweise ist der mindestens eine Anschlag in der Längsachse des Instruments versetzt zu einer Nut angeordnet, welche im Verbindungsende gebildet ist und in welcher ein Teil des Kopfes des Dentalteils aufnehmbar ist.

Weitere spezifische Konstruktionsmerkmale und deren Vorteile sind aus folgender Beschreibung und Zeichnungen eines Ausführungsbeispiels ersichtlich, in welchen
Fig. 1 eine perspektivische Ansicht eines erfindungsgemässen Instruments,
Fig. 2 das Instrument aus Fig. 1 in einer Seitenansicht,
Fig. 3 das Instrument aus Fig. 1 in einer Vorderansicht,
Fig. 4 das Instrument aus Fig. 1 geschnitten gemäss der Linie IV-IV in Fig. 3,
Fig. 5 das Instrument aus Fig. 1 geschnitten gemäss der Linie V-V in Fig. 3,
Fig. 6 eine Detailansicht des Verbindungsendes des Instruments aus Fig. 1,
Fig. 7 eine weitere perspektivische Ansicht des Instruments aus Fig. 1,
Fig. 8 eine perspektivische Ansicht eines mit dem Instrument gemäss Fig. 1 handhabbaren Dentalteils,
Fig. 9 eine geschnittene Draufsicht des Dentalteils aus Fig. 8,
Fig. 10 eine geschnittene Seitenansicht des Dentalteils aus Fig. 8,
Fig. 11 eine perspektivische Ansicht des Instruments aus Fig. 1 und des Dentalteils aus Fig. 8 nach dem Zusammenfügen,
Fig. 12 die Anordnung gemäss Fig. 11 geschnitten gemäss der Linie XII-XII in Fig. 11, und
Fig. 13 die Anordnung gemäss Fig. 11 in einem Längsschnitt darstellen.

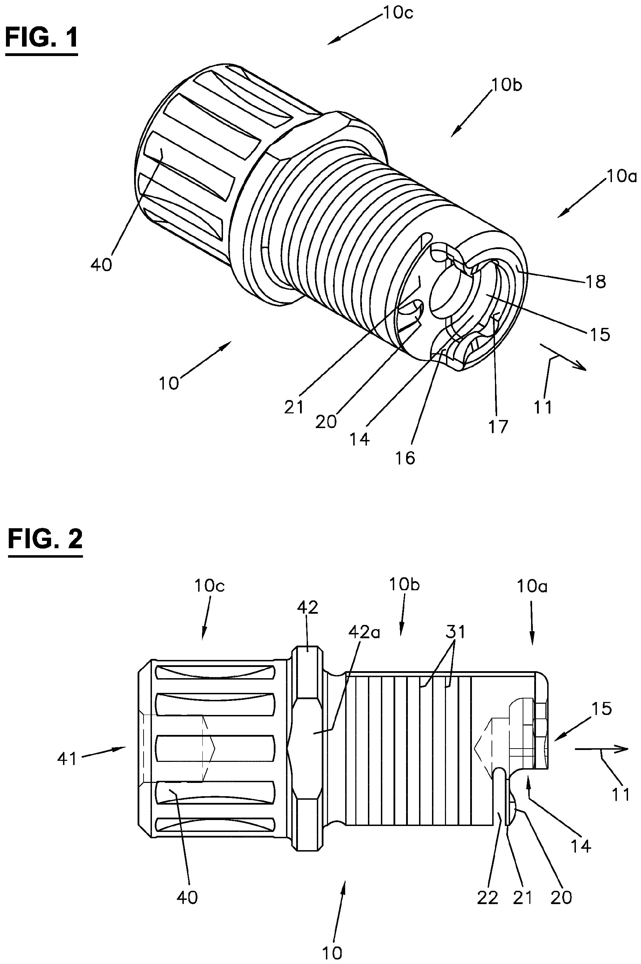

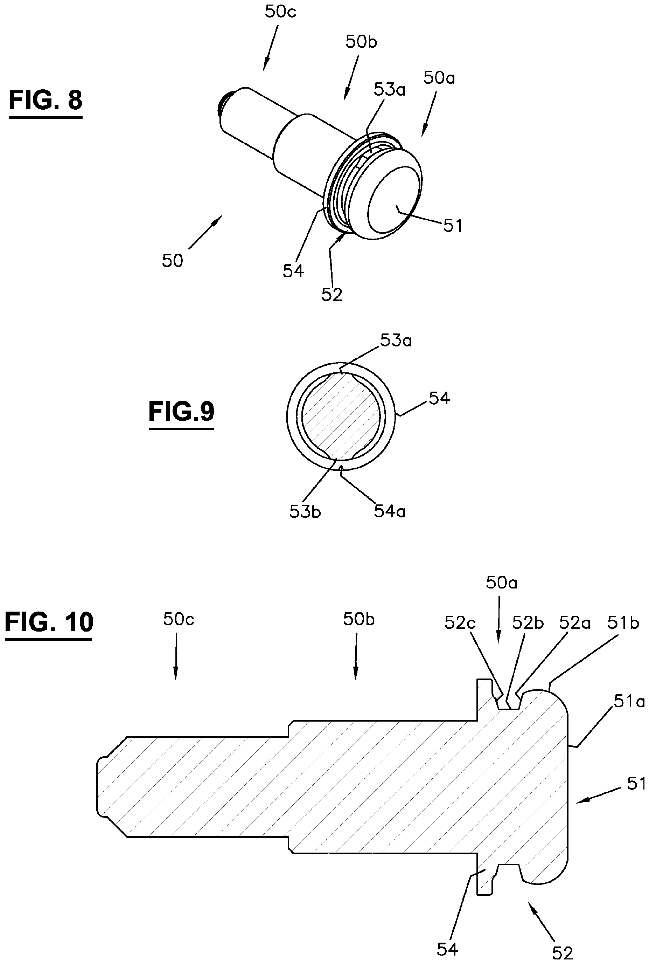

Figuren 1-7 zeigen ein Instrument 10, das zum Handhaben eines Dentalteils 50 dient, wie es z.B. in den Figuren 8-10 gezeigt ist. Das Instrument 10 ist hier zur Verwendung als Schraubendreher zum Drehen des Dentalteils 50 gedacht und wird daher nachfolgend als solchen bezeichnet.

Der Schraubendreher 10 erstreckt sich in der Längsachse 11, welcher hier der Drehachse entspricht, um welche das Dentalteil 50 gedreht werden soll. Er umfasst ein Verbindungsende 10a, ein Handhabungsende 10c und einen diese beide Enden verbindenden Mittelteil 10b. Das Verbindungsende 10a dient zur Aufnahme des Dentalteils, so dass dieses handbar ist, z.B. ist das Dentalteil durch Drehen des Verbindungsendes 10a um die Drehachse 11 drehbar. Das Verbindungsende 10a weist eine seitliche Aufnahmeöffnung 14 auf, in welcher der Kopf des Dentalteils einfügbar ist, indem er quer zur Drehachse 11 in die Aufnahmeöffnung 14 eingeschoben wird. Stirnseitig umfasst das Verbindungsende 10a eine Durchgangsöffnung 15, welche in die Aufnahmeöffnung 14 übergeht und durch welche hindurch das Dentalteil hindurchragt, wenn sein Kopf in der Aufnahmeöffnung 14 aufgenommen ist.

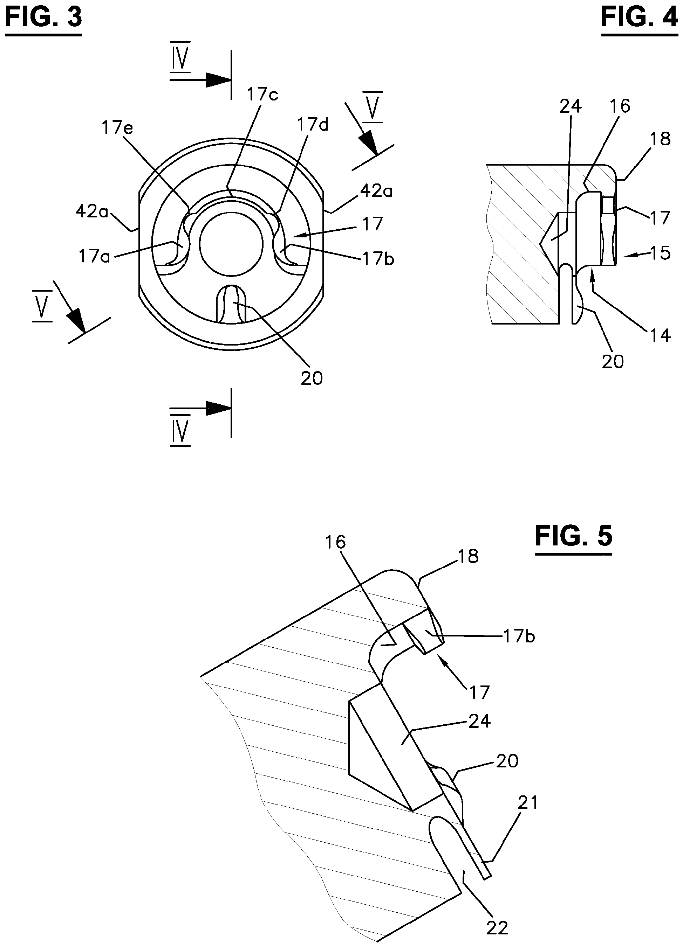

Die Wandung des Verbindungsendes 10a ist so geformt, dass eine Nut 16 gebildet ist, an welcher ein Absatz 17 angrenzt, dessen Aussenseite Teil der Stirnseite 18 des Verbindungsendes 10a ist. Die Nut 16 sowie der Absatz 17 erstrecken sich nicht um den vollen Umfang, sondern über einen Winkelbereich, der kleiner als 360 Grad ist, bevorzugt kleiner als 270 Grad (vgl. Fig. 3).

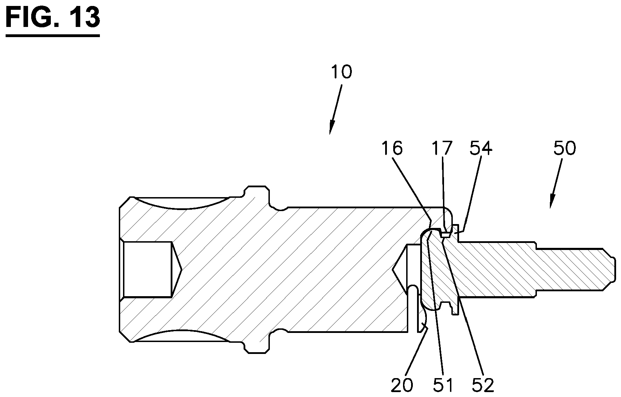

Die Nut 16 ist im Wesentlichen komplementär zum entsprechenden Teil des Dentalteils 50 ausgebildet, so dass dieses die Wandung der Nut 16 kontaktiert, wenn sein Kopf im Verbindungsende 10a aufgenommen ist (vgl. Fig. 13).

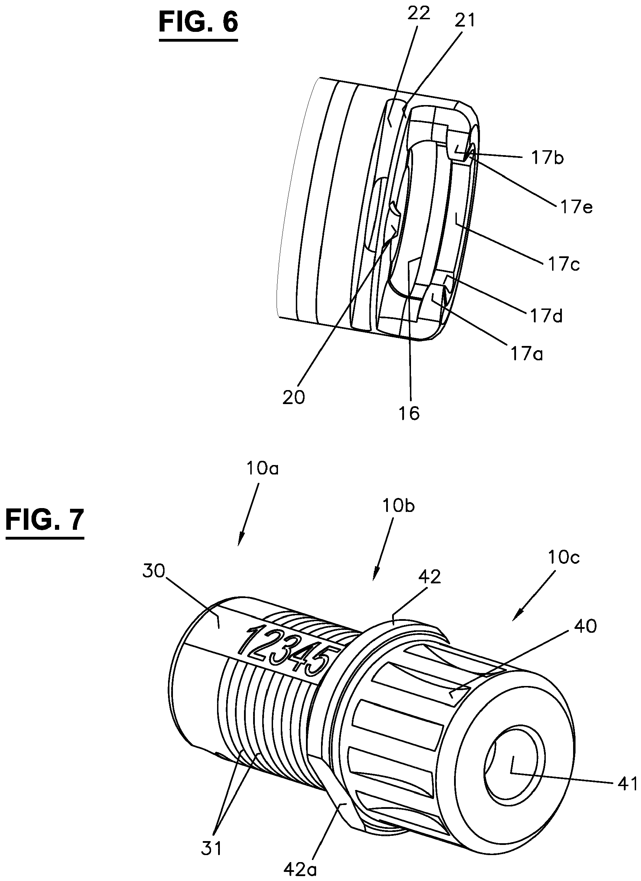

Der Absatz 17 ist jeweils endseitig verdickt ausgebildet, indem er dort mehr nach innen, d.h. zur Drehachse 11 hin, hervorspringt als bei seinem mittleren Teil 17c (vgl. die verdickten Enden 17a, 17b in Figuren 3 und 6). Wie weiter unten erläutert, bildet das jeweilige Ende 17a, 17b einen Anschlag für das Dentalteil 50, um das Drehmoment des Schraubendrehers 10 übertragen zu können. Zwischen dem mittleren Teil 17c des Absatzes 17 und dem jeweiligen Ende 17a, 17b weist der Absatz 17 hier eine Stelle 17d, 17e mit verringerter Wandstärke auf, indem dort der Absatz 17 radial nach aussen, d.h. von der Drehachse 11 weg verläuft. Die Stellen 17d, 17e können auch weggelassen sein.

Das Verbindungsende 10a weist weiter ein oder mehrere Haltemittel auf, welche einem Herausfallen des Dentalteils entgegenwirken, wenn dieses in der Aufnahmeöffnung 14 aufgenommen ist. Hier umfassen die Haltemittel eine Nase 20, die sich auf dem Niveau der Nut 16 befindet. In Richtung der Drehachse 11 gesehen, befindet sich die Nase 20 zwischen den beiden Enden der Nut 16 im mittleren Bereich (vgl. Fig. 3). Die Nase 20 ist so gelagert, dass sie axial (d.h. in Richtung der Drehachse 11) ausweichen kann. Zu diesem Zweck ist die Nase 20 auf einem Lamellenelement 21 angeordnet, welches endseitig gehalten ist, so dass es sich in axialer Richtung elastisch bewegen kann. Das Lamellenelement 21 ist hier in Form eines Abschnitts einer Lochscheibe gebildet, welcher endseitig mit der Wandung verbunden ist, in welcher die Nut 16 gebildet ist. Das Lamellenelement 21 ist beabstandet zum Mittelteil 10b angeordnet, so dass eine Bewegung in axialer Richtung ermöglicht ist (vgl. den Leerraum 22 in Fig. 2, 5 oder 6).

In der Verlängerung der Durchgangsöffnung 15 weist das Mittelteil 10b des Schraubendrehers 10 ein Sackloch 24 auf. Dieses ergibt sich z.B. verfahrenstechnisch beim Herstellen des Lamellenelements 21.

Das Mittelteil 10b ist hier als Körper ausgebildet, der im Wesentlichen zylindrisch ist. An der Aussenseite sind als Skala dienende Markierungen 31 angebracht, die hier in Form von äquidistant angeordneten Linien ausgestaltet sind. Wie Fig. 7 zeigt, ist weiter auf der Aussenseite des Mittelteils 10b eine Massangabe 30 angebracht, die hier mit den Ziffern 1 bis 5 versehen ist. Natürlich kann diese Massangabe auch anders ausgestaltet oder auch ganz weggelassen sein. Falls vorhanden bilden die Massangabe 30 und die Markierungen 31 einen Massstab, welcher es erlaubt, die Höhe ab einem bestimmten Niveau zu bestimmen. Beispielsweise wird es dem Zahnarzt erleichtert, die Grösse eines geeigneten Abutments auszuwählen, indem er den Schraubendreher 10 auf das Implantat bzw. das Abutment auf dem Implantat aufsetzt und anhand der Markierungen 31 abliest, bis auf welches Niveau ein Abutment einer bestimmten Grösse zu liegen kommt.

Das Handhabungsende 10c des Schraubendrehers 10 ist an den jeweiligen Anwendungszweck ausgelegt. Hier ist das Handhabungsende 10c so ausgebildet, dass es mit einem weiteren Werkzeug verbindbar ist, um den Schraubendreher 10 zusammen mit einem aufgenommenen Dentalteil zu drehen. Das Handhabungsende 10c weist einen Kopf mit einer äusseren Profilierung 40 auf, die zur Bildung einer drehfesten Verbindung komplementär zum Verbindungskopf eines Drehmomentschlüssels ("Ratsche") ausgestaltet ist. Ein derartiges Werkzeug wird eingesetzt, um ein definiertes Anzugsmoment auf das im Mund zu fixierende Dentalteil ausüben zu können.

Wie in Fig. 7 ersichtlich, weist das Handhabungsende 10c vorderseitig ein Sackloch 41. Dieses dient als Gegenhalter beim Anziehen bzw. Lösen.

Das Mittelteil 10b ist mit dem Handhabungsende 10c via eine Auskragung 42 verbunden, welche Abflachungen 42a aufweist, um ein Rollen bei der Handhabung zu verhindern.

Der Kopf des Handhabungsendes 10c kann auch anders ausgestaltet sein und ist entsprechend der Auslegung des damit zu verbindenden Werkzeugs angepasst. Ist z.B. eine Verbindung mit einem vom Zahnarzt verwendeten Winkelstück vorgesehen, ist der Kopf des Handhabungsendes 10c als ISO-Anschluss auslegbar.

Bei Bedarf kann der Benutzer den Schraubendreher 10 auch direkt mit dem Fingern handhaben, indem er das Handhabungsende 10c als Griff verwendet.

Der Schraubendreher 10 ist aus gängigen Materialien wie Kunststoff und/oder Metall fertigbar als Einzelstück oder mehrteilig.

Ein Beispiel eines mit dem Schraubendreher 10 handhabbaren Dentalteils 50 ist in den Figuren 8-10 dargestellt. Das Dentalteil 50 dient im vorliegenden Ausführungsbeispiel als Patrizenteil, das mit einem entsprechenden Gegenstück ("Matrizenteil") verbindbar ist, um einen Zahnersatz, beispielsweise eine Prothese, in lösbarer Weise im Mund anbringen zu können. Das Patrizenteil ist hier als Abutment ausgebildet, das ein Verbindungsende 50a aufweist, welches via ein Patrizenmittelteil 50b mit einem Befestigungsende 50c verbunden ist. Patrizenmittelteil 50b und Befestigungsende 50c sind so ausgebildet, dass das Abutment 50 an einem Implantat befestigbar ist. Zu diesem Zweck weist das Befestigungsende 50c z.B. ein Gewinde auf, welches in ein komplementäres Gewinde am Implantat einschraubbar ist.

Je nach Anwendung sind die Teile 50b und 50c auch so auslegbar, dass das Patrizenteil 50 an einem Wurzelstift, Wurzelanker, auf einem Steg oder direkt in einem Knochen oder einer Zahnwurzel anbringbar ist. Zu diesem Zweck kann das Patrizenteil ein Ende mit einem Gewinde aufweisen.

Wie insbesondere Fig. 10 zeigt, weist das Verbindungsende 50a des Patrizenteils 50 stirnseitig einen Kopf 51 mit einer Kontur auf, die konvex und/oder eben geformt ist. Im vorliegenden Beispiel weist die Kontur eine ebene Stirnseite 51a auf, die seitlich an eine umlaufende, runde Fläche 51b angrenzt, die hier einen kreisrunden Querschnitt aufweist. Vorzugsweise ist der Kopf 51 frei von Kanten, die einen Benutzer bei einer Anwendung im Mund stören können, und/oder frei von konkaven Flächen, insbesondere Vertiefungen, die u.a. eine Reinigung erschweren. Die Fläche 51b grenzt an eine Nut 52, die zwei Seitenflächen 52a und 52c aufweist, zwischen welchen eine Bodenfläche 52b angeordnet ist. Die Seitenflächen 52a und 52c sind im Querschnitt gesehen zueinander gerichtet angeordnet, so dass sich die Nut 52 in Richtung zur Bodenfläche 52b hin verjüngt. Dadurch wird u.a. das Verbinden mit dem Schraubendreher 10 erleichtert.

Wie insbesondere Figuren 8 und 9 zeigen, weist das Verbindungsende 50a Vorsprünge 53a, 53b auf, welche hier in Form von auf dem Niveau der Nut 52 angeordneten Verdickungen ausgebildet sind. Wie insbesondere aus Fig. 9 ersichtlich, erstreckt sich ein jeweiliger Vorsprung 53a, 53b um die Längsachse des Patrizenteils 50 über einen Winkelbereich, der kleiner als 180 Grad ist, bevorzugt kleiner als 90 Grad, besonders bevorzugt kleiner als 45 Grad. Wie weiter unten erläutert, dienen die Vorsprünge 53a, 53b zur Drehmomentübertragung des Schraubendrehers 10. Hier sind zwei Vorsprünge 53a, 53b vorgesehen. Je nach Auslegung ist auch ein einzelner Vorsprung 53a oder 53b ausreichend.

An die Nut 52 grenzt ein umlaufender Kragen 54 an, welcher im vorliegenden Beispiel tellerförmig ausgestaltet ist. Dieser steht, wie in Fig. 10 ersichtlich, seitlich ab und hat hier einen grösseren Durchmesser als der Kopf 51. Der Kragen 54 grenzt an das Patrizenmittelteil 50b und kann eine Markierung aufweisen, die z.B. als Hilfe dient, um die winkelmässige Ausrichtung des Patrizenteils 50 festzustellen. Hier ist die Markierung als Kerbe 54a ausgebildet, welche sich im Bereich der einen Verdickung 53b befindet (vgl. Fig. 9). Die Markierung kann auch an anderer Stelle sein, z.B. am Kopf 51.

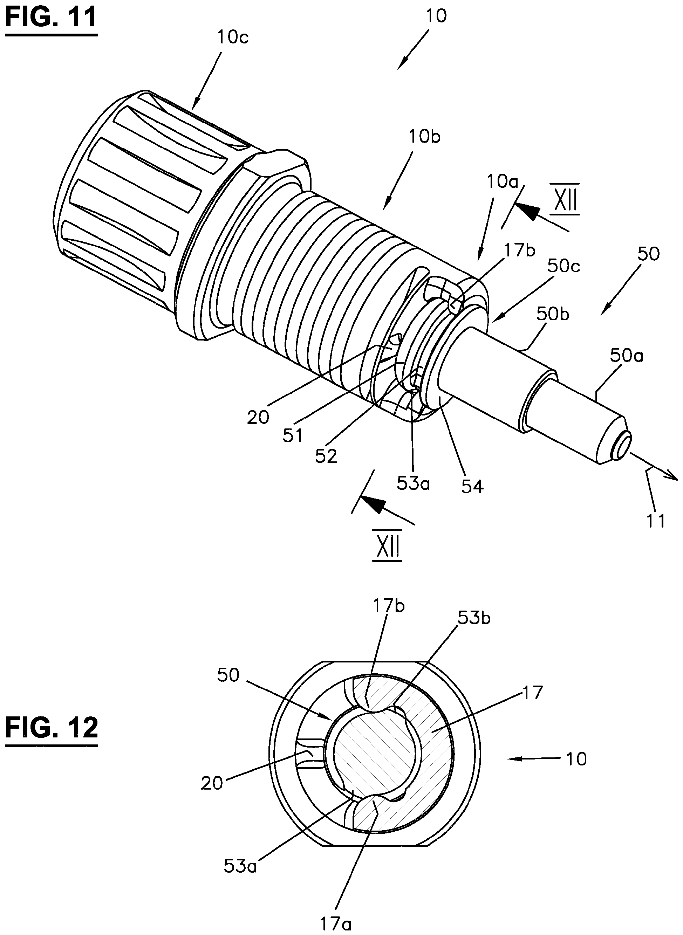

Mittels des Schraubendrehers 10 ist ein Dentalteil, z.B. das Patrizenteil 50 aus Figuren 8-10 wie folgt handhabbar, vgl. Figuren 11-13:

Das Verbindungsende 50a des Patrizenteils 50 wird in die seitliche Aufnahmeöffnung 14 des Schraubendrehers 10 eingefügt, indem das Patrizenteil 50 relativ zum Schraubendreher 10 quer zur Drehachse 11 bewegt wird. Beim Einfügen wird die Nase 20 am Schraubendreher 10 aus der Ruheposition weggedrückt und gelangt wieder in diese zurück, sobald der Kopf 51 des Patrizenteils 50 in der Nut 16 des Schraubendrehers 10 zu liegen kommt. Das Patrizenteil 50 ist durch die Nase 20 seitlich gehalten, so dass ein unbeabsichtigtes Herausfallen verhindert ist. Der Absatz 17 des Schraubendrehers 10 greift in die Nut 52 des Patrizenteils 50. Der Kragen 54, welcher hier an der Stirnseite 18 des Schraubendrehers 10 anliegt, sowie der Patrizenmittelteil 50b und das Verbindungsende 50a ragen durch die Durchgangsöffnung 15 hindurch (vgl. Fig. 1).

Nach dem Einfügen werden in der Regel die verdickten Enden 17a, 17b am Schraubendreher 10 sowie die Vorsprünge 53a, 53b am Patrizenteil 50 beabstandet zueinander angeordnet sein. Der Schraubendreher 10 kann daher relativ zum Patrizenteil 50 um einen bestimmten Winkel alpha gedreht werden, bevor die verdickten Enden 17a, 17b die Vorsprünge 53a, 53b kontaktieren. Nun ist eine drehfeste Verbindung entstanden, d.h. ein weiteres Drehen des Schraubendrehers 10 bewirkt ein entsprechendes Drehen des Patrizenteils 50.

In Fig. 12 ist die Situation dargestellt, bei welcher der Schraubendreher 10 im Gegenuhrzeigersinn gedreht worden ist, sodass der Vorsprung 53a aussen am Ende 17a und der Vorsprung 53b innen am Ende 17b anliegen.

Das Anziehen des Patrizenteils 50 bis zur Endstellung erfolgt gegebenenfalls dadurch, dass ein Drehmomentschlüssel am Handhabungsende 10c aufgesetzt und betätigt wird, so dass das aufgebrachte Drehmoment via den Schraubendreher 10 auf das Patrizenteil 50 übertragen wird. Als Sicherheit gegenüber einem Überdrehen ist das Verbindungsende 10a des Schraubendrehers 10 so ausgestaltbar, dass beim Überschreiten eines Schwellenwertes des Drehmoments die Enden 53a, 53b auseinander gedrückt werden und die Vorsprünge 17a, 17b darüber hinweggleiten können und/oder der Schraubendreher weggebogen wird.

Das Trennen des Schraubendrehers 10 vom Patrizenteil 50 erfolgt durch ein seitliches Bewegen, so dass eine Kraft auf die Nase 20 ausgeübt wird, welche diese wegdrückt, und so die Aufnahmeöffnung 14 freigegeben wird und das Verbindungsende 50a vom Kopf 51 weggezogen werden kann.

Der Winkel alpha, um welchen Schraubendreher 10 und Patrizenteil 50 relativ zueinander drehbar sind, bevor eine Übertragung des Drehmoments stattfindet, ist hier grösser als 90 Grad und entspricht etwas weniger als einer halben Umdrehung. Eine derartige Ausgestaltung der relativen Drehbewegung erleichtert insbesondere das Anbringen sowie Trennen des Schraubendrehers 10, wenn sich das Patrizenteil 50 im Mund eines Patienten befindet und daher aufgrund der engen Platzverhältnisse ein bestimmtes Positionieren eines Werkzeuges erschwert ist.

Das Lösen eines festgeschraubten Patrizenteils 50 erfolgt in analoger Weise wie das Festziehen durch seitliches Einfügen des Schraubendrehers 10 am Patrizenteil 50, Drehen des Schraubendrehers 10 bis sich Enden 17a, 17b und Vorsprünge 53a, 53b kontaktieren und weiteres Drehen in die gleiche Richtung, so dass das Patrizenteil 50 gelöst und herausgedreht wird.

Aus der vorangehenden Beschreibung sind dem Fachmann zahlreiche Abwandlungen zugänglich, ohne den Schutzbereich der Erfindung zu verlassen, der durch die Ansprüche definiert ist.

Das Instrument braucht nicht notwendigerweise als Schraubendreher eingesetzt zu werden. Es ist denkbar, es allgemein zur Handhabung eines Dentalteils zu verwenden. Beispielsweise ist das Dentalteil ein Patrizenteil, welches lediglich durch Verschieben und Druck in Längsrichtung im Mund anbringbar ist. Entsprechend weist das Instrument, welches sich in der Längsachse zwischen dem Handhabungsende und dem Verbindungsende erstreckt, eine Aufnahmeöffnung auf, welche seitlich offen ist, so dass Verbindungsende und Dentalteil verbindbar sind, indem sie relativ zueinander quer zur Längsachse verschoben werden.

Optional weist das Instrument mindestens ein Haltemittel auf, beispielsweise eine oder mehrere federnde Nasen, z.B. in Form der Nase 20, welches zum Halten des in der Aufnahmeöffnung aufgenommenen Kopfes des Dentalteils dient, um einem Trennen von Verbindungsende und Kopf entgegenzuwirken. Diese Ausgestaltung erlaubt insbesondere eine aspirationssichere Handhabung des Dentalteils.

Weiter optional weist das Verbindungsende des Instruments einen Absatz auf, welcher sich um die Längsachse über einen Winkelbereich erstreckt, der kleiner als 360 Grad ist, bevorzugt kleiner als 270 Grad, und welcher mit einer am Dentalteil gebildeten Nut in Eingriff bringbar ist.

Der Kopf des Patrizenteils kann auch anders ausgestaltet sein als in den Figuren 8 bis 10, beispielsweise kann er konisch, kugelförmig oder andersartig geformt sein. Entsprechend ist die Aufnahmeöffnung (14) des Instruments angepasst, um den Kopf des Patrizenteils einfügen zu können. Vorzugsweise weist das Patrizenteil eine Nut (52) auf, welche in Eingriff bringbar ist mit dem Instrument.

## Patentansprüche

1. Instrument (10) zur Handhabung eines Dentalteils (50), wobei das Instrument sich in einer Längsachse (11) erstreckt zwischen einem Handhabungsende (10c) und einem Verbindungsende (10a) zum Verbinden mit dem Dentalteil (50), **dadurch gekennzeichnet, dass**
das Verbindungsende (10a) eine Aufnahmeöffnung (14) zur Aufnahme des Kopfes (51) des Dentalteils (50) und mindestens ein Haltemittel (20) aufweist zum Halten des in der Aufnahmeöffnung (14) aufgenommenen Kopfes (51) des Dentalteils (50), um einem Trennen von Verbindungsende und Kopf entgegenzuwirken, wobei die Aufnahmeöffnung (14) seitlich offen ist, so dass Verbindungsende (10a) und Dentalteil (50) verbindbar sind, indem sie relativ zueinander quer zur Längsachse (11) verschoben werden, und wobei das Verbindungsende (10a) als Haltemittel eine federnde Nase (20) aufweist zum seitlichen Halten des Dentalteils (50), wobei das Verbindungsende (10a) mindestens einen Anschlag (17a, 17b) aufweist zur Übertragung des Drehmoments, welches am als Schraubendreher dienenden Instrument (10) erzeugbar ist, auf das Dentalteil (50), und wobei der Anschlag (17a, 17b) mit einem am Dentalteil gebildeten Vorsprung (53a, 53b) kontaktierbar ist, indem Schraubendreher (10) und Dentalteil (50) nach dem Zusammenfügen relativ zueinander um die Drehachse (11) gedreht werden.

2. Instrument nach Anspruch 1, wobei die Nase (20) an einem Lamellenelement (21) angeordnet ist.

3. Instrument nach einem der vorangehenden Ansprüche, wobei das Verbindungsende (10a) einen Absatz (17) aufweist, welcher sich um die Längsachse (11) über einen Winkelbereich erstreckt, der kleiner als 360 Grad ist, bevorzugt kleiner als 270 Grad, und welcher mit einer am Dentalteil (50) gebildeten Nut (52) in Eingriff bringbar ist.

4. Instrument nach einem der vorangehenden Ansprüche, mit einem zwischen Verbindungsende (10a) und Handhabungsende (10c) angeordneten Mittelteil (10b), welches eine Skala (31) aufweist zum Bestimmen einer Länge in Richtung der Längsachse (11).

5. Instrument nach einem der vorangehenden Ansprüche, wobei das Handhabungsende (10c) ausgestaltet ist zur Bildung einer drehfesten Verbindung mit einem Drehmomentschlüssel oder einem Winkelstück.

6. Patrizenteil, welches zum Drehen um eine Drehachse (11) mit einem Instrument nach einem der vorangehenden Ansprüche verbindbar ist, wobei das Patrizenteil (50) ein Befestigungsende (50c) aufweist zur lösbaren Befestigung in einem Mund, insbesondere an einem Implantat, und ein Kopfende (50a) zur lösbaren Verbindung mit einem an einem Zahnersatz befestigbaren Matrizenteil, wobei das Kopfende (50a) mindestens einen quer zur Drehachse (11) verlaufenden Vorsprung (53a, 53b) aufweist, mit welchem ein am Instrument (10) gebildeter Anschlag (17a, 17b) kontaktierbar ist zur Übertragung eines am Instrument erzeugten Drehmoments, indem durch relatives Verschieben des Patrizenteils und des Instruments (10) quer zur Drehachse (11) das Kopfende (50a) in die seitlich offene Aufnahmeöffnung (14) des Instruments (10) aufnehmbar ist und nach dem Zusammenfügen das Instrument und das Patrizenteil relativ zueinander um die Drehachse (11) drehbar sind.

7. Patrizenteil nach Anspruch 6, wobei das Kopfende (50a) des Patrizenteils (50) eine Nut (52) aufweist, welche in Eingriff bringbar ist mit dem Instrument (10).

8. Patrizenteil nach Anspruch 7, wobei der mindestens eine Vorsprung (53a, 53b) auf dem Niveau der Nut (52) angeordnet ist.

9. Patrizenteil nach Anspruch 7 oder 8, wobei die Nut (52) einen sich verjüngenden Querschnitt (52a, 52b, 52c) aufweist.

10. Patrizenteil nach einem der Ansprüche 7 bis 9, welches einen umlaufenden Kragen (54) aufweist, der zwischen Befestigungsende (50c) und Nut (52) angeordnet ist.

11. Patrizenteil nach einem der Ansprüche 6 bis 10, wobei das Befestigungsende ein um die Drehachse (11) drehbares Gewindeende (50c) ist.

12. Teilesatz mit einem Instrument nach einem der Ansprüche 1 bis 5 und mindestens einem Patrizenteil, vorzugsweise einem Patrizenteil nach einem der Ansprüche 6 bis 11.

## Claims

1. Instrument (10) for handling a dental part (50), wherein the instrument extends in a longitudinal axis (11) between a handling end (10c) and a connecting end (10a) for connection to the dental part (50), **characterized in that**
the connecting end (10a) comprises a receiving opening (14) for receiving the head (51) of the dental part (50) and at least one holding means (20) for holding the head (51) of the dental part (50) when accommodated in the receiving opening (14) to counteract separation of the connecting end and the head, wherein the receiving opening (14) is laterally open so that the connecting end (10a) and the dental part (50) are apt to be connected by displacing them relative to one another transversely to the longitudinal axis (11) and wherein the connecting end (10a) comprises a resilient nose (20) as the holding means for laterally holding the dental part (50), wherein the connecting end (10a) comprises at least one stop (17a, 17b) for transferring the torque, which can be generated on the instrument (10) serving as a screwdriver, to the dental part (50), and wherein the stop (17a, 17b) is apt to be contacted with a protrusion (53a, 53b) formed on the dental part by rotating the instrument (10) and the dental part (50) after joining relative to one another about the longitudinal axis (11).

2. Instrument according to claim 1, wherein the nose (20) is arranged on a lamellar element (21).

3. Instrument according to any one of the preceding claims, wherein the connecting end (10a) comprises a shoulder (17) which extends about the longitudinal axis (11) over an angle range that is smaller than 360 degrees, preferably smaller than 270 degrees, and which is engageable with a groove (52) formed on the dental part (50).

4. Instrument according to any one of the preceding claims, comprising a middle part (10b), which is arranged between the connecting end (10a) and the handling end (10c) and which includes a scale (31) for determining a length in the direction of the longitudinal axis (11).

5. Instrument according to any one of the preceding claims, wherein the handling end (10c) is designed to form a rotationally fixed connection with a torque wrench or an angle piece.

6. Male part, which is connectable to an instrument according to any one of the preceding claims for rotation about an axis of rotation (11), wherein the male part (50) comprises a fastening end (50c) for releasably fastening in a mouth, in particular on an implant, and a head end (50a) for releasable connection to a female part that can be fastened to a dental prosthesis, wherein the head end (50a) comprises at least one protrusion (53a, 53b), which protrudes transversely to the axis of rotation (11) and with which a stop (17a, 17b) formed on the instrument (10) is apt to be contacted to transfer a torque generated on the instrument in that the head end (50a) is receivable in the laterally open receiving opening (14) of the instrument (10) by a relative displacement of the male part (50) and the instrument (10) transversely to the axis of rotation (11) and the instrument and the male part are rotatable about the axis of rotation (1) relative to one another after being joined.

7. Male part according to claim 6, wherein the head end (50a) of the male part (50) comprises a groove (52), which is engageable with the instrument (10).

8. Male part according to claim 7, wherein the at least protrusion (53a, 53b) is arranged at the level of the groove (52) .

9. Male part according to claim 7 or 8, wherein the groove (52) has a tapering cross section (52a, 52b, 52c).

10. Male part according to any one of claims 7 to 9, which comprises a circumferential collar (54) arranged between the fastening end (50c) and the groove (52).

11. Male part according to any one of claims 6 to 10, wherein the fastening end is a thread end (50c) that is rotatable around the axis of rotation (11).

12. Set comprising an instrument according to any one of claims 1 to 5 and at least one male part, preferably a male part according to any one of claims 6 to 11.

## Revendications

1. Instrument (10) de manipulation d'une pièce dentaire (50), ledit instrument s'étendant dans un axe longitudinal (11) entre une extrémité de manipulation (10c) et une extrémité de liaison (10a) permettant de le relier à la pièce dentaire (50), **caractérisé en ce que**
l'extrémité de liaison (10a) présente une ouverture de réception (14) destinée à recevoir la tête (51) de la pièce dentaire (50) et au moins un moyen de retenue (20) permettant de retenir la tête (51) de la pièce dentaire (50) reçue dans l'ouverture de réception (14) afin de contrecarrer la séparation de l'extrémité de liaison et de la tête, l'ouverture de réception (14) étant latéralement ouverte, de sorte que l'extrémité de liaison (10a) et la pièce dentaire (50) peuvent être reliées en les déplaçant l'une par rapport à l'autre transversalement à l'axe longitudinal (11), et l'extrémité de liaison (10a) comportant un moyen de retenue sous la forme d'un ergot (20) élastique afin de retenir latéralement la pièce dentaire (50), l'extrémité de liaison (10a) présentant au moins une butée (17a, 17b) permettant de transmettre à la pièce dentaire (50) le moment d'une force pouvant être généré avec l'instrument (10) servant de tournevis, et la butée (17a, 17b) pouvant être amenée en contact avec une saillie (53a, 53b) formée sur la pièce dentaire en tournant le tournevis (10) et la pièce dentaire (50) l'un par rapport à l'autre autour de l'axe de rotation (11) après leur assemblage.

2. Instrument selon la revendication 1, où l'ergot (20) est agencé sur un élément à lamelle (21).

3. Instrument selon l'une des revendications précédentes, où l'extrémité de liaison (10a) présente un épaulement (17) s'étendant autour de l'axe longitudinal (11) sur une plage angulaire inférieure à 360 degrés, préférablement inférieure à 270 degrés, et qui peut être amené en engagement avec une rainure (52) formée sur la pièce dentaire (50).

4. Instrument selon l'une des revendications précédentes, comprenant une partie centrale (10b) agencée entre l'extrémité de liaison (10a) et l'extrémité de manipulation (10c) qui présente une échelle (31) permettant de déterminer une longueur dans la direction de l'axe longitudinal (11).

5. Instrument selon l'une des revendications précédentes, où l'extrémité de manipulation (10c) est conçue de manière à établir une liaison solidaire en rotation à une clé dynamométrique ou un contre-angle.

6. Partie mâle pouvant être reliée à un instrument selon l'une des revendications précédentes afin de la tourner autour d'un axe de rotation (11), la partie mâle (50) comprenant une extrémité de fixation (50c) pour sa fixation détachable dans une bouche, plus particulièrement sur un implant, et une extrémité de tête (50a) pour sa liaison détachable à une partie femelle attachable à une prothèse dentaire, l'extrémité de tête (50a) présentant au moins une saillie (53a, 53b) s'étendant transversalement à l'axe de rotation (11), avec laquelle une butée (17a, 17b) formée sur l'instrument (10) peut être amenée en contact afin de transmettre un moment d'une force généré avec l'instrument (10) en ce que l'extrémité de tête (50a) peut être reçue dans l'ouverture de réception (14) latéralement ouverte de l'instrument en déplaçant la partie mâle et l'instrument (10) l'une par rapport à l'autre transversalement à l'axe de rotation (11) et que l'instrument et la partie mâle peuvent être tournés l'un par rapport à l'autre autour de l'axe de rotation (11) après leur assemblage.

7. Partie mâle selon la revendication 6, où l'extrémité de tête (50a) de la partie mâle (50) présente une rainure (52) qui peut être amenée en engagement avec l'instrument (10) .

8. Partie mâle selon la revendication 7, où ladite au moins une saillie (53a, 53b) est agencée au niveau de la rainure (52).

9. Partie mâle selon la revendication 7 ou 8, où la rainure (52) présente une section transversale (52a, 52b, 52c) qui se rétrécit.

10. Partie mâle selon l'une des revendications 7 à 9, laquelle présente une collerette (54) circonférentielle agencée entre l'extrémité de fixation (50c) et la rainure (52) .

11. Partie mâle selon l'une des revendications 6 à 10, où l'extrémité de fixation est l'extrémité (50c) d'un filetage pouvant tourner autour de l'axe de rotation (11).

12. Jeu de pièces comprenant un instrument selon l'une des revendications 1 à 5 et au moins une partie mâle, préférablement une partie mâle selon l'une des revendications 6 à 11.
